# DEMANDE DE BREVET EUROPEEN

(11) **EP 2 426 629 A1**
(43) Date de publication de la demande: **07.03.2012**
(21) Numéro de dépôt: 11179244.6
(22) Date de dépôt: 30.08.2011
(51) Int. Cl.: G06Q 10/00

(54) **Procédé de notification de la réception d'un courriel par une application de courrier électronique d'un utilisateur**

(30) Priorité: 02.09.2010 FR 1003516
(71) Demandeur: Alcatel Lucent, 75007 Paris (FR)
(72) Inventeur: Bogard, Sophie, 29806 Brest Cedex 9 (FR); Berthemet, Jacques Henri, 29806 Brest Cedex 9 (FR)
(74) Mandataire: Sciaux, Edmond

(57) **Abrégé**

L'invention concerne un procédé de notification de la réception d'un courriel (1) par une application (2) de courrier électronique d'un utilisateur, ledit procédé prévoyant, lorsque ladite application reçoit un courriel (1), de :
- déterminer une information de filtrage en fonction de l'emploi du temps de l'utilisateur ;
- appliquer ladite information de filtrage pour notifier la réception dudit courriel à l'utilisateur.

## Description

L'invention concerne un procédé de notification de la réception d'un courriel par une application de courrier électronique d'un utilisateur, ainsi qu'une application de courrier électronique comprenant des moyens de réception de courriels pour un utilisateur de ladite application et un module de notification de la réception de courriels par ladite application.

Les applications de courrier électronique sont aujourd'hui largement répandues, notamment dans les entreprises, en raison de leur simplicité et de leur rapidité d'utilisation.

Cependant, malgré leur caractère pratique, de telles applications peuvent également perturber le travail quotidien de leurs utilisateurs et ainsi constituer un frein pour la productivité desdits utilisateurs lorsque ceux-ci sont employés d'une entreprise.

En effet, chaque fois qu'un utilisateur reçoit un courriel, son application de courrier électronique émet une alerte, le plus souvent sous la forme d'une fenêtre surgissante (pour l'anglais pop-up window) accompagnée ou non d'un signal sonore. De façon évidente, une telle alerte peut, lorsqu'elle est émise de façon intempestive, distraire l'utilisateur et le déconcentrer dans ses tâches. En outre, des études récentes ont été menées sur le sujet et leurs résultats corroborent l'impact négatif des alertes surgissantes de réception de courriels sur l'efficacité au travail.

En particulier, selon une étude menée par des chercheurs de la Standford University de Californie, et dont les conclusions sont exposées dans l'article disponible sur le site Internet de cette faculté à l'adresse http://news.stanford.edu/news/2009/august24/multitask-research-study-082409.html, les utilisateurs qui ont l'habitude de gérer plusieurs tâches à la fois, notamment de consulter leurs courriels reçus dès la réception d'une alerte tout en continuant à travailler sur une tâche en cours, ont plus de difficultés à se concentrer que les utilisateurs qui préfèrent gérer une tâche à la fois, et sont de ce fait moins productifs.

Pour éviter d'être dérangé dans une tâche, l'utilisateur d'une application de courrier électronique peut choisir de ne pas être informé de la réception de nouveaux courriels durant une période déterminée de sa journée de travail, afin de rester concentré sur ladite tâche durant ladite période. Pour ce faire, l'utilisateur peut fermer son application de courrier électronique et programmer son redémarrage pour la fin de la période déterminée.

Cependant, cette solution ne donne pas entièrement satisfaction, en ce qu'elle ne permet pas à un utilisateur de sélectionner les courriels pour lesquels il souhaite être averti de leur réception. En outre, il risque de ne pas être averti à temps de la réception d'un courriel important, comme un courriel de son supérieur hiérarchique ou un courriel catégorisé, par exemple avec un indicateur visuel en forme de drapeau rouge.

L'invention vise à perfectionner l'art antérieur en proposant une solution permettant à un utilisateur d'une application de courrier électronique de choisir de ne pas être dérangé par les alertes de réception de courriels tout en lui évitant le risque de manquer un courriel important.

A cet effet, selon un premier aspect, l'invention propose un procédé de notification de la réception d'un courriel par une application de courrier électronique d'un utilisateur, ledit procédé prévoyant, lorsque ladite application reçoit un courriel, de :
- déterminer une information de filtrage en fonction de l'emploi du temps de l'utilisateur;
- appliquer ladite information de filtrage pour notifier la réception dudit courriel à l'utilisateur.

Selon un deuxième aspect, l'invention propose une application de courrier électronique comprenant des moyens de réception de courriels pour un utilisateur de ladite application et un module de notification de la réception de courriels par ladite application, ledit module comprenant :
- des moyens de détermination d'une information de filtrage en fonction de l'emploi du temps dudit utilisateur ;
- des moyens d'application de ladite information de filtrage pour notifier la réception des courriels audit utilisateur.

D'autres particularités et avantages de l'invention apparaîtront dans la description qui suit, faite en référence aux figures annexées dans lesquelles :
- la figure 1 représente de façon schématique la mise en oeuvre d'un procédé de notification selon l'invention ;
- la figure 2 représente de façon schématique une architecture comprenant une application de courrier électronique qui comprend des moyens pour mettre en oeuvre un procédé de notification selon l'invention.

En relation avec ces figures, on décrit ci-dessous un procédé de notification de la réception d'un courriel 1 par une application 2 de courrier électronique d'un utilisateur. Le courriel 1 est envoyé à l'application 2 de courrier électronique de l'utilisateur par un serveur 3 de courrier électronique.

L'application 2 de courrier électronique comprend des moyens de réception du courriel 1 et un module 4 de notification de la réception dudit courriel par ladite application.

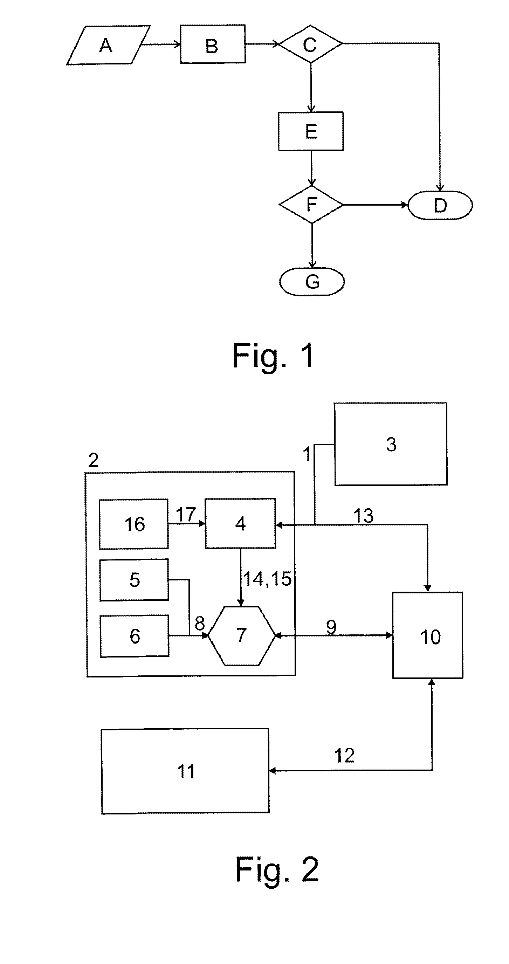

En relation avec la figure 2, les moyens de réception de l'application 2 de courrier électronique peuvent être intégrés au module 4 de notification, ledit module occupant alors une place centrale au sein de ladite application.

Le procédé prévoit, lorsque l'application 2 de courrier électronique reçoit un courriel 1, de déterminer une information de filtrage en fonction de l'emploi du temps de l'utilisateur. Pour cela, le module 4 de notification comprend des moyens de détermination d'une information de filtrage en fonction de l'emploi du temps de l'utilisateur.

Selon un mode de réalisation, le procédé prévoit l'activation de créneaux temporels dans l'emploi du temps de l'utilisateur et la configuration des informations de filtrage des courriels 1 dans lesdits créneaux activés. En relation avec la figure 2, l'application 2 de courrier électronique comprend un module 5 d'activation de créneaux temporels dans l'emploi du temps de l'utilisateur et un module 6 de configuration des informations de filtrage des courriels 1 dans lesdits créneaux activés.

En outre, l'activation et la configuration peuvent être réalisées par l'utilisateur. Pour ce faire, le module 5 d'activation et le module 6 de configuration peuvent comprendre des moyens pour permettre à l'utilisateur d'activer des créneaux temporels et de configurer des informations de filtrage des courriels 1 dans lesdits créneaux depuis l'interface graphique utilisateur (GUI, pour Graphical User Interface) de l'application 2.

En particulier, l'application 2 de courrier électronique peut comprendre une interface graphique en forme de calendrier dans laquelle l'utilisateur peut activer de tels créneaux temporels et configurer des informations de filtrage dans lesdits créneaux.

Le module 5 peut comprendre des moyens aptes à afficher sur l'interface graphique de l'application 2 une fenêtre de dialogue dans laquelle l'utilisateur peut définir les paramètres d'un créneau temporel qu'il souhaite activer, par exemple les heures de début et de fin de l'activation dudit créneau, la durée de ladite activation, ou encore la périodicité de ladite activation.

Par exemple, l'utilisateur peut afficher la fenêtre de dialogue précitée en cliquant deux fois avec le bouton de sa souris sur une zone du calendrier de l'interface graphique de l'application 2, ou encore en cliquant sur un onglet de la barre d'outils de ladite interface.

La fenêtre de dialogue affichée peut également permettre à l'utilisateur de paramétrer la visibilité de l'activation d'un créneau temporel pour les expéditeurs de courriels 1 reçus. Par exemple, l'activation d'un tel créneau peut être rendue visible à un expéditeur d'un courriel 1 reçu par l'envoi automatique audit expéditeur d'un courriel indiquant ladite activation et éventuellement la durée de ladite activation.

En outre, le module 6 peut comprendre des moyens aptes à afficher un onglet dans la fenêtre de dialogue pour permettre à l'utilisateur de configurer une information de filtrage dans le créneau temporel.

Par exemple, si l'utilisateur souhaite que tous les courriels 1 reçus par son application 2 soient filtrés durant le créneau temporel activé, il peut configurer une information de filtrage correspondante.

Selon un mode de réalisation, l'information de filtrage dépend d'au moins une donnée contenue dans le courriel 1 reçu ; les moyens de détermination du module 4 de notification sont donc aptes à filtrer les courriels 1 notifiés en fonction d'une telle donnée.

En particulier la donnée précitée peut être relative à l'importance du courriel 1 reçu et/ou à l'expéditeur dudit courriel. Par exemple, la donnée peut être relative à la présence ou non d'un indicateur visuel d'importance dans le titre du courriel 1 et/ou à l'adresse de messagerie de l'expéditeur dudit courriel.

En outre, les moyens de détermination peuvent être aptes à filtrer un courriel 1 notifié en fonction de la présence ou non de l'adresse de messagerie de son expéditeur dans la liste des contacts de l'utilisateur de l'application 2, voire en fonction de ladite adresse. Par exemple, si l'utilisateur est un employé d'une entreprise et si l'expéditeur est un supérieur hiérarchique de l'utilisateur dans ladite entreprise, ledit utilisateur peut configurer une information de filtrage de sorte que les courriels 1 envoyés par l'expéditeur ne soient pas filtrés.

Une fois que l'utilisateur a défini les paramètres du créneau temporel et configuré une information de filtrage dans ledit créneau, il peut enregistrer ledit créneau, par exemple en cliquant avec sa souris sur le bouton interactif correspondant de la fenêtre de dialogue, afin d'activer ledit créneau.

En relation avec la figure 2, les modules d'activation 5 et de configuration 6 sont aptes à envoyer à un module 7 de synchronisation locale intégré dans l'application 2 une notification 8 commune comprenant le créneau temporel et l'information de filtrage configurée dans ledit créneau, ledit module de synchronisation étant apte à envoyer une notification 9 comprenant ledit créneau à une base de données 10.

Selon un mode de réalisation, l'information de filtrage est synchronisée avec le statut dudit utilisateur dans une autre application 11.

En particulier, la base de données 10 peut être localisée sur le terminal de l'utilisateur afin d'être partagée par l'ensemble des applications installées sur ledit terminal. Ainsi, lorsque l'utilisateur active un créneau temporel, l'application 2 enregistre ledit créneau dans la base de données 10 et ladite base envoie une notification 12 dudit enregistrement à une autre application 11 dudit utilisateur, par exemple une application de messagerie instantanée, afin que ladite autre application synchronise le statut dudit utilisateur en fonction de l'information de filtrage configurée dans ledit créneau.

En outre, l'activation et la configuration peuvent être réalisées par un administrateur de la mise en oeuvre du procédé de notification pour au moins un utilisateur, par exemple un chef de service dans une entreprise souhaitant que ses subordonnés ne soient pas dérangés dans leur travail par les notifications de réception de courriels 1 jugés peu importants par ledit chef.

Pour ce faire, l'administrateur peut activer un créneau temporel dans son application de courrier électronique (non représentée) et configurer une information de filtrage dans ledit créneau en choisissant durant ladite configuration les utilisateurs pour lesquels ledit créneau doit être activé. Par exemple, le module de configuration de l'application de courrier électronique de l'administrateur peut être apte à afficher un champ de sélection d'utilisateurs dans l'onglet de configuration d'une information de filtrage, ledit administrateur pouvant notamment entrer l'identifiant des utilisateurs concernés dans ledit champ.

En activant le créneau temporels, l'administrateur l'enregistre dans une base de données 10 commune à un ensemble d'utilisateurs, par exemple en étant localisée dans un serveur commun auxdits utilisateurs, ladite base envoyant aux applications 2 de courrier électronique de chacun des utilisateurs concernés une notification 13 comprenant ledit créneau temporel.

En relation avec la figure 2, le module 4 de notification peut comprendre des moyens pour recevoir la notification 13 et des moyens pour envoyer une notification 14 au module 7 de synchronisation locale, ledit module comprenant en outre une mémoire cache pour y enregistrer ledit créneau avec ladite information de filtrage.

En outre, le procédé prévoit d'appliquer l'information de filtrage pour notifier la réception d'un courriel 1 reçu à un utilisateur. Pour ce faire, le module 4 de notification comprend des moyens d'application de ladite information de filtrage.

En relation avec la figure 1, le procédé prévoit, à la réception A d'un courriel, une étape de vérification B de l'emploi du temps de l'utilisateur, et en particulier une étape d'interrogation C dudit emploi du temps afin de déterminer la présence ou non d'un créneau temporaire activé.

S'il n'existe pas de créneau temporaire activé à la réception d'un courriel, le procédé prévoit de passer directement à l'étape D d'affichage d'une alerte afin de notifier la réception dudit courriel.

En revanche, s'il existe un créneau temporaire activé, le procédé prévoit une étape d'interrogation E dudit créneau afin d'obtenir les informations de filtrage configurées dans ledit créneau, suivie d'une étape F de détermination d'une information de filtrage pour le courriel reçu.

S'il existe dans le créneau temporel une information de filtrage autorisant la notification du courriel reçu, le procédé passe alors à l'étape D d'affichage d'une alerte afin d'effectuer ladite notification.

Dans le cas contraire, le procédé prévoit le blocage G de ladite notification, afin de ne pas déranger l'utilisateur.

En relation avec la figure 2, lorsqu'un utilisateur reçoit un courriel 1, le module 4 de notification envoie une requête 15 au module 7 de synchronisation locale de l'application 2 dudit utilisateur, afin d'obtenir des informations sur la présence ou non d'un créneau temporel activé et, dans l'affirmative, d'une information de filtrage pour ledit courriel dans ledit créneau.

S'il existe un créneau temporel activé, le module 7 l'extraie de sa mémoire cache et l'envoie au module 4, les moyens de détermination du module 4 étant aptes à déterminer une information de filtrage pour le courriel 1 à partir de l'information de filtrage configurée dans ledit créneau et dudit courriel.

Si le courriel 1 comprend une donnée indiquant qu'il doit être filtré, par exemple si ledit courriel ne comprend pas d'indicateur visuel d'importance, ou si l'adresse de l'expéditeur dudit courriel n'est pas un supérieur hiérarchique de l'utilisateur, ou encore si ladite adresse ne figure pas dans la liste de contacts dudit utilisateur, les moyens de détermination du module 4 envoient alors au module 16 d'émission d'alertes surgissantes une notification 17 bloquant l'émission d'une alerte pour le courriel 1.

En revanche, si le courriel 1 comprend au moins une donnée parmi les données précitées, les moyens de détermination du module 4 envoient au module 16 une notification 17 autorisant l'émission d'une alerte pour ledit courriel.

En outre, s'il n'existe pas de créneau temporel activé, les moyens de détermination du module 4 envoient au module 16 une notification 17 autorisant l'émission d'une alerte pour le courriel 1.

## Revendications

1. Procédé de notification de la réception d'un courriel (1) par une application (2) de courrier électronique d'un utilisateur, ledit procédé prévoyant, lorsque ladite application reçoit un courriel (1), de :
- déterminer une information de filtrage en fonction de l'emploi du temps de l'utilisateur ;
- appliquer ladite information de filtrage pour notifier la réception dudit courriel à l'utilisateur.

2. Procédé de notification selon la revendication 1, **caractérisé en ce qu'**il prévoit l'activation de créneaux temporels dans l'emploi du temps de l'utilisateur et la configuration des informations de filtrage des courriels (1) dans lesdits créneaux activés.

3. Procédé de notification selon la revendication 2, **caractérisé en ce que** l'activation et la configuration sont réalisées par l'utilisateur et/ou par un administrateur de la mise en oeuvre du procédé pour au moins un utilisateur.

4. Procédé de notification selon l'une quelconque des revendications 1 à 3, **caractérisé en ce que** l'information de filtrage dépend d'au moins une donnée contenue dans le courriel (1) reçu, afin de filtrer les courriels (1) notifiés en fonction de ladite donnée.

5. Procédé de notification selon la revendication 4, **caractérisé en ce que** la donnée est relative à l'importance du courriel (1) reçu et/ou à l'expéditeur dudit courriel.

6. Procédé de notification selon l'une quelconque des revendications 1 à 5, **caractérisé en ce que** l'information de filtrage est synchronisée avec le statut dudit utilisateur dans une autre application (11).

7. Application (2) de courrier électronique comprenant des moyens de réception de courriels (1) pour un utilisateur de ladite application et un module (4) de notification de la réception de courriels (1) par ladite application, ledit module comprenant :
- des moyens de détermination d'une information de filtrage en fonction de l'emploi du temps dudit utilisateur ;
- des moyens d'application de ladite information de filtrage pour notifier la réception des courriels (1) audit utilisateur.

8. Application de courrier électronique selon la revendication 7, **caractérisée en ce qu'**elle comprend un module (5) d'activation de créneaux temporels dans l'emploi du temps de l'utilisateur et un module (6) de configuration des informations de filtrage des courriels (1) dans lesdits créneaux activés.

9. Application de courrier électronique selon la revendication 7 ou 8, **caractérisée en ce que** les moyens de détermination sont aptes à filtrer les courriels (1) notifiés en fonction d'au moins une donnée contenue dans lesdits courriels.
